# DEMANDE DE BREVET EUROPEEN

(11) **EP 0 810 275 A1**
(43) Date de publication de la demande: **03.12.1997**
(21) Numéro de dépôt: 97401137.1
(22) Date de dépôt: 23.05.1997
(51) Int. Cl.: C09K 11/64

(54) **Matériau luminophore vert et procédé de fabrication**

(30) Priorité: 31.05.1996 FR 9606739
(71) Demandeur: THOMSON-CSF, 75008 Paris (FR)
(72) Inventeur: Pham, Thi Mai, THOMSON-CSF S.C.P.I., 94117 Arcueil cedex (FR); Le Fur, Adèle, THOMSON-CSF S.C.P.I., 94117 Arcueil cedex (FR)

(57) **Abrégé**

L'invention concerne une famille de luminophores Ba_{z} Al₁₂₋ₓMnₓ0₁₉ avec 0,8≤z≤1,3 dans laquelle x est compris entre 0,2 et 0,7 et qui présente un temps de déclin à 10 % de l'énergie lumineuse émise inférieure à environ 15 ms.

Elle concerne également un procédé de fabrication de cette famille de luminophores, utilisant une étape de vide primaire afin d'obtenir une atmosphère neutre ou réductrice avec un taux en oxygène inférieur à environ 10 ppm.

Ce procédé présente le grand intérêt de permettre la formation d'hexa-aluminate de barium avec fort taux de manganèse pour abaisser le temps de déclin, tout en conservant un rendement lumineux élevé.

Application: Ecran à plasma pour télévision haute définition.

## Description

L'invention concerne des matériaux luminophores verts ayant un haut rendement lumineux et une persistance lumineuse adaptée aux applications de télévision et plus précisément aux écrans à plasma haute définition.

En effet, dans ce type d'application, on recherche des persistances lumineuses ou temps de déclin à 10 % de l'intensité initiale émise, typiquement inférieurs à une quinzaine de millisecondes afin d'éviter l'effet de traînage des images.

Actuellement, on dispose de panneaux à plasma dont les rayonnements émis excitent les luminophores capables d'émettre dans le visible. Les panneaux contiennent un gaz réactif (mélange de xénon et de néon) qui par décharge électrique produit des rayonnements lumineux dans le domaine des ultraviolets courts, entre 140 et 170 nm, encore dénommés rayonnements VUV. Ces rayonnements lumineux sont particulièrement adaptés à certaines familles de luminophores et notamment aux hexa-aluminates de barium déjà connus pour présenter un bon rendement lumineux sous excitation UV, vers 250 nm. La couleur d'émission du luminophore est gouvernée par la nature de l'activateur dispersé dans la matrice. Il s'agit notamment d'europium pour la couleur bleue et de manganèse pour la couleur verte.

Dans le cas d'hexa-aluminates de barium dopé manganèse de formule générale Ba_{z}Al₁₂₋ₓMnₓO₁₉ avec 0,8≤z≤1,3, l'émission se situe à 517 nm pour une excitation lumineuse voisine de 220 nm. A titre d'exemple, le produit commercial Kx502 de chez Kyoko présente un temps de déclin de l'ordre de 18 à 20 ms pour un rendement quantique voisin de 0,9. Des analyses ont montré que son taux x en manganèse est voisin de 0,05.

Ce type de produit commercialisé présente un temps de déclin trop long pour les applications visées dans lesquelles on recherche des temps de déclin inférieurs à 15 ms voir 10 ms.

Par ailleurs, on sait que pour obtenir une diminution du temps de déclin, on peut augmenter le taux en manganèse x.

De tels luminophores sont fabriqués selon un procédé classique utilisant le chauffage d'un mélange d'oxydes et de sels contenant les éléments constituant du luminophore. Ce chauffage est effectué dans un four, à une température telle que l'on atteigne la formation de la phase cristalline recherchée du luminophore. Dans le cas précis des hexa-aluminates de barium, il s'agit de la structure spinelle de l'alumine β.

Néanmoins, des essais effectués dans des fours non étanches sous atmosphère d'azote ou sous atmosphère réductrice d'azote et d'hydrogène montrent que l'on favorise la formation d'ions Mn³⁺ ou Mn⁴⁺ au détriment d'ions Mn²⁺ lorsque la concentration en manganèse augmente. Ce phénomène tend à diminuer le rendement lumineux du luminophore, dans la mesure où les ions efficaces en terme de rendement lumineux sont les ions divalents Mn²⁺.

C'est pourquoi, l'invention propose un procédé de fabrication des matériaux luminophores Ba_{z}Al₁₋ₓMnₓO₁₉ avec x supérieur à environ 0,2 et z compris entre 0,8 et 1,3.

Et plus largement, l'invention a pour objet un matériau luminophore à base d'hexa-aluminate de barium dopé manganèse de formule générale Ba_{z}Al₁₂₋ₓMnₓO₁₉ avec 0≤x≤1 et avec 0,8≤z≤1,3, caractérisé en ce que x est supérieur à environ 0,2 et inférieur à environ 0, 7 et en ce qu'il présente un temps de persistance lumineuse à 10 % de l'intensité lumineuse initiale émise, inférieur à environ 15 ms.

Avantageusement, le matériau luminophore est caractérisé en ce que x est voisin de 0,3 et en ce que son temps de déclin est voisin de 10 millisecondes.

L'invention a également pour objet un procédé de fabrication d'un matériau luminophore à base d'hexa-aluminate de barium dopé manganèse de formule générale Ba_{z}Al₁₋ₓMnₓO₁₉ avec x supérieur à environ 0,3 et avec z compris entre 0,8 et 1,3 caractérisé en ce qu'il comprend :
- le mélange de sels ou d'oxydes contenant les éléments Al, Mn et Ba, dans une enceinte chauffante ;
- la réalisation d'une atmosphère neutre ou réductrice dans l'enceinte chauffante, présentant une quantité d'oxygène inférieure à environ 10 particules par million (ppm) ;
- la montée en température de l'enceinte chauffante à une température Tf de formation du luminophore Ba_{z}Al₁₋ₓMnₓO₁₉.

L'invention sera mieux comprise et d'autres avantages apparaîtront à la lecture de la description qui va suivre donnée à titre non limitatif et grâce aux figures annexées parmi lesquelles :
- la figure 1 illustre les performances obtenues avec une famille de luminophores Ba_{0,8}Al₁₂₋ₓMnₓO₁₉ élaborée selon un procédé de l'invention, en fonction du taux x en manganèse;
   * la courbe 1a correspond à l'évolution du rendement lumineux, en fonction du taux x ;
   * la courbe 1b correspond à l'évolution du temps de déclin, en fonction du taux x ;
- la figure 2 illustre l'évolution du rendement lumineux en fonction du taux de manganèse pour une famille de luminophores Ba_{0,8}Al₁₂₋ₓMnₓO₁₉ ;
   * la courbe 2a est relative à une famille de luminophores élaborés sous courant d'azote ;
   * la courbe 2b est relative à une famille de luminophores élaborés sous atmosphère réductrice ;
- la figure 3 illustre l'évolution du temps de déclin en fonction du taux de manganèse pour une famille de luminophores Ba_{0,8}Al₁₂₋ₓMnₓO₁₉ ;
   * la courbe 3a est relative à une famille de luminophores élaborés sous courant d'azote ;
   * la courbe 3b est relative à une famille de luminophores élaborés sous atmosphère réductrice.

Tous les rendements lumineux sont rapportés en pourcentage par rapport au produit commercial Kx502

Les matériaux luminophores selon l'invention peuvent avantageusement être élaborés selon le procédé suivant :

Des sels ou des oxydes contenant Al, Mn, Ba sont mélangés dans un véhicule liquide au moyen d'un mélangeur (type Turbulat). La poudre obtenue est séchée et tamisée, puis versée dans un creuset en alumine. Le creuset est introduit dans un four tube, muni de moyens de fermeture étanches.

Un vide primaire conduisant à une pression voisine de 10⁻² mbars est effectué dans le four.

Puis on fait circuler un courant d'azote sec contenant au maximum une quantité d'oxygène d'environ 10 ppm.

L'ensemble est chauffé à 1 400°C ou 1 550°C pendant 2 heures.

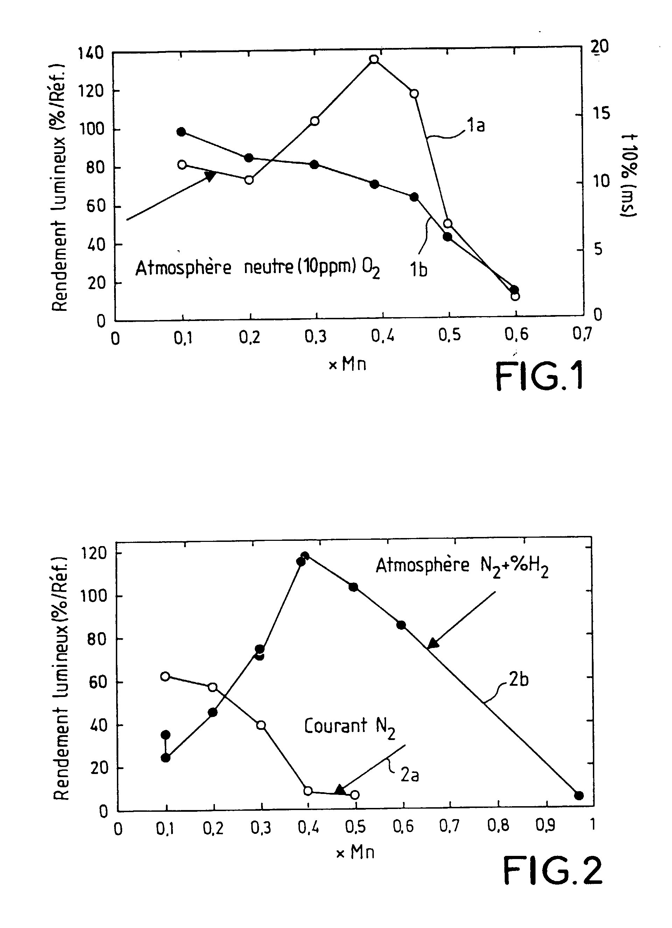

Lorsque l'on étudie les performances obtenues avec une famille de luminophores en fonction du taux de manganèse on observe les résultats fournis par la figure 1. Il s'agit d'un ensemble de composés Ba_{0,8} Al₁₂₋ₓMnₓO₁₉ pour lesquels l'étude a été menée.

Les courbes 1a et 1b montrent que l'on obtient de très bonnes performances en terme de rendement lumineux et de temps de déclin pour des valeurs de x comprises entre 0,3 et 0,5.

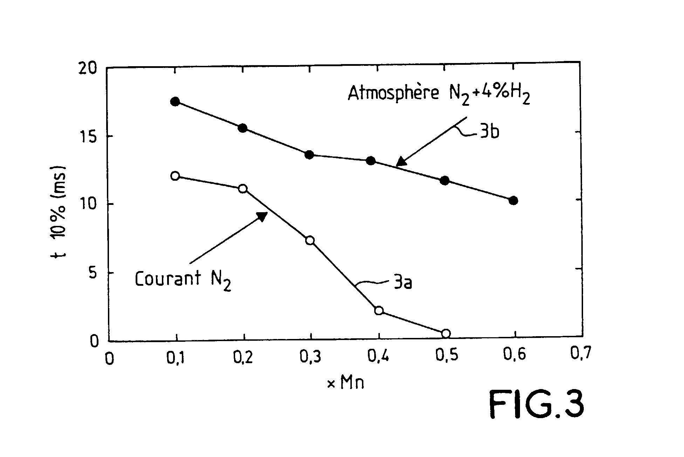

Ces résultats sont à comparer avec ceux des figures 2 et 3.

En effet, les résultats présentés en figures 2 et 3 sont obtenus avec la même famille de luminophores synthétisés d'une part sous courant d'azote, sans étape de vide préliminaire (courbes 2a et 3a) et d'autre part en atmosphère réductrice sous courant d'azote en présence d'hydrogène.

Les expériences menées en atmosphère réductrice sont intéressantes dans la mesure où elles montrent que dans ces conditions, on augmente le rendement lumineux c'est-à-dire que l'on obtient la formation d'ions Mn²⁺, mais le temps de déclin n'est pas abaissé.

Il ressort clairement des courbes 2a et 2b que sous atmosphère réductrice on arrive à augmenter le rendement lumineux par rapport à celui obtenu à partir d'une synthèse effectuée de manière classique en milieu neutre. Néanmoins les courbes 3a et 3b montrent qu'il est nécessaire de trouver un compromis, dans la mesure où une atmosphère réductrice, augmente nettement le temps de déclin. En effet, l'augmentation du rendement lumineux en présence d'atmosphère réductrice est sous doute liée à une meilleure dispersion des ions manganèse dans la matrice, néanmoins la présence d'agrégats dans la matrice sous atmosphère neutre présente l'intérêt de générer des temps de déclin plus courts (on peut notamment avec 0,5≤x≤0,7 obtenir un temps de déclin de 10 ms).

Les premières courbes 1a et 1b témoignent de l'intérêt du procédé de l'invention et du matériau obtenu qui présente pour des taux de manganèse x supérieurs à environ 0,3 une efficacité lumineuse et un temps de déclin tout à fait adaptés aux contraintes rencontrées dans le domaine de la télévision haute définition.

D'une manière générale, la taille des grains de luminophore obtenu, dépend de la taille d'alumine utilisée comme matière première. La poudre élaborée selon un procédé de l'invention, à 1 550°C montre une taille moyenne de grains de 15 µm qui s'agglomèrent pour former de gros agglomérats de 300 µm. Il est nécessaire d'envisager une étape de broyage pour des applications de télévision haute définition dans lesquelles on récupère des tailles de grains de l'ordre de quelques microns pour obtenir une meilleure définition des pixels.

C'est pourquoi, selon une variante du procédé de l'invention, on effectue une étape de broyage consistant à mettre en suspension dans l'eau la poudre obtenue selon le procédé de l'invention, en présence de billes de broyage de 1 à 2 mm de diamètre.

Typiquement, la suspension peut être introduire dans un flacon rigide à l'intérieur d'un tourne-jarre et l'ensemble peut être mis en rotation durant plusieurs heures. Le choc entre les billes, lors du mouvement de rotation conduit à un broyage efficace. On est ainsi en mesure d'obtenir une dispersion des agrégats et la taille moyenne des grains est alors inférieure à 2 µm. Cette poudre fine ne perd que 5 % de son rendement lumineux alors que son temps de déclin ne varie pas. Ceci est un aspect important, dans la mesure où généralement les étapes de broyage ont tendance à dégrader les propriétés des luminophores.

### Exemples de réalisation de luminophores selon l'invention

### Exemple 1

On réalise une suspension de 152 g d'alumine (Al₂O₃), 39 g de carbonate de barium (BaCO₃), 13,4 g de carbonate de manganèse, dans 0,2 l d'eau au moyen d'un mélangeur pendant 4 heures.

Après agitation, l'eau est évaporée dans une étuve à 60°C. On obtient un mélange pulvérulent qu'on introduit dans un creuset en alumine. Le creuset est fermé avec un couvercle en alumine et est placé dans un four étanche. Le four est mis sous vide primaire pour évacuer l'air, dans l'atmosphère de cuisson. Le traitement thermique est effectué à 1 450°C sous un courant d'azote sec pendant 2 heures.

Le produit obtenu après cuisson est une poudre blanche dont la taille moyenne de grain est de 10 µm. Le rendement lumineux est de l'ordre de 110 % par rapport au produit commercial Kx502 de chez Kyoko.

Le temps de déclin à 10 % de l'intensité lumineuse initiale est de 10 ms.

Il est possible d'ajuster la taille moyenne des grains en fonction de la température de cuisson. Le tableau ci-après montre des variations sur le rendement lumineux en fonction de cette température de cuisson mais le temps de déclin reste constant.

| **T de cuisson (°C)** | **Taille moyenne de grains (µm)** | **Rendement** |
|---|---|---|
| 1 350 | 8 | 130 |
| 1 400 | 9 | 127 |
| 1 450 | 10 | 122 |
| 1 550 | 12 | 100 |

### Exemple 2

Pour améliorer la taille moyenne de grains, le luminophore de l'exemple 1, est mis en suspension dans l'eau avec des billes de zircone de 2 mm de diamètre.

La composition est 20 g de luminophore, 150 g de billes, 0,1 l d'eau.

La suspension est mise en rotation à l'aide d'un tourne-jarre pendant 17 heures. Le mélange est versé dans un tamis pour récupérer les billes. La suspension est lavée et la poudre est récupérée par centrifugation. La taille moyenne de grain est de 1,5 à 2 µm. La poudre présente un rendement de 105 % par rapport au produit commercial Kx502 et un temps de déclin de 10,5 ms.

### Exemple 3

Les résultats obtenus sur la phase cristalline φ₁ de la famille Ba_{0,8}Al₁₂₋ₓMnₓO₁₉ sont également confirmés sur la phase cristalline φ₂ de la famille Ba_{1,3}Al₁₂₋ₓMnₓO₁₉.

### Exemple 4

Cent grammes (102 g) d'alumine γ (Al₂O₃-γ), 43 g de carbonate de barium (BaCO₃), et 16 g de fluorure d'aluminium AlF₃ sont mis en suspension dans trois cent cinquante trois centilitres (200 cl) d'une solution normale de sulfate de manganèse au moyen d'un mélangeur pendant 4 heures. L'eau est ensuite évaporée par un séchage sous épiradiateur. Durant l'évaporation la barbotine est mélangée à l'aide d'un agitateur magnétique pour homogénéiser la répartition de manganèse. Après séchage, on obtient un mélange pulvérulent qu'on introduit dans un creuset en alumine. Le creuset est fermé avec un couvercle en alumine et placé dans un four étanche. le four est mis sous vide primaire pour évacuer l'air dans l'atmosphère de cuisson. Le traitement thermique est effectué à 1 550°C sous un courant d'azote sec pendant 2 heures.

Le produit obtenu après cuisson est une poudre blanche dont la taille de grain moyen est de 13 µm. Le rendement lumineux est de l'ordre de 100 % par rapport au luminophore décrit dans les exemples précédents. Le temps de déclin à 10 % est de 11 millisecondes.

## Revendications

1. Matériau luminophore à base d'hexa-aluminate de barium, dopé manganèse, de formule générale Ba_{z}Al₁₂₋ₓMnₓO₁₉ avec 0≤x≤1 et avec 0,8≤z≤1,3 caractérisé en ce que :
- x est supérieur à environ 0,2 et inférieur à environ 0,7 ;
- il a un temps de persistance lumineuse inférieur à environ 15 ms, à 10 % de l'intensité lumineuse émise.

2. Matériau luminophore selon la revendication 1, caractérisé en ce que x est voisin de 0,3 et que son temps de déclin est voisin de 10 millisecondes.

3. Procédé de fabrication d'un matériau luminophore à base d'hexa-aluminate de barium, dopé manganèse de formule général Ba_{z} Al₁₋ₓMnₓO₁₉ avec x supérieur à environ 0,2 et avec z compris entre 0,8 et 1,3, caractérisé en ce qu'il comprend :
- le mélange de sels ou d'oxydes contenant les éléments Al, Mn et Ba dans une enceinte chauffante ;
- la réalisation d'une atmosphère neutre dans l'enceinte chauffante présentant une quantité d'oxygène inférieure à environ 10 particules par million ;
- la montée en température de l'enceinte chauffante à une température de formation du luminophore BaAl₁₋ₓMnₓO₁₉.

4. Procédé de fabrication d'un matériau luminophore selon la revendication 3, caractérisé en ce que le produit obtenu par chauffage des sels ou oxydes, est broyé en milieu liquide en présence de billes de broyage.
